# EUROPÄISCHE PATENTSCHRIFT

(11) **EP 0 764 728 B1**
(45) Veröffentlichungstag und Bekanntmachung des Hinweises auf die Patenterteilung: **19.01.2000**
(21) Anmeldenummer: 96115092.7
(22) Anmeldetag: 20.09.1996
(51) Int. Cl.: C25C 3/12

(54) **Vorrichtung zur Bearbeitung der an der Oberseite einer Blockanode vorhandenen Zapfenlöcher**
Device for machining the studholes in the upper surface of an anode block
Dispositif d'usinage des trous de goujon dans la partie supérieure d'un bloc d'anode

(30) Priorität: 25.09.1995 DE 19535609; 17.11.1995 DE 19542931
(43) Veröffentlichungstag der Anmeldung: 26.03.1997
(73) Patentinhaber: DEUTZ Aktiengesellschaft, 51063 Köln (DE)
(72) Erfinder: Caspelherr, Heinz, 51147 Köln (DE)

(56) Entgegenhaltungen:
- EP-A- 0 121 954
- FR-A- 2 590 911
- GB-A- 2 100 754
- GB-A- 2 115 441
- US-A- 4 017 569
- US-A- 4 604 178

## Beschreibung

Die Erfindung betrifft eine Vorrichtung zur Bearbeitung der an der Oberseite einer Kohlenstoff-Blockanode vorhandenen vorgeformten Zapfenlöcher, bevor in diese von oben die zu einem Joch ausgebildeten unteren Enden einer Stromzuführungsstange bzw. Anodenstange eingeführt werden.

Zur Herstellung von Anodenblöcken wird in der Blockform einer Rüttelmaschine unter Vibrationsverdichtung zunächst eine sogenannte Grünanode abgeformt. Dabei arbeitet die Blockform mit einem Deckgewicht zusammen, dessen Unterseite eine Formplatte mit zapfenartig nach unten vorstehenden Vorsprüngen aufweist, mittels denen bei der Vibrationsabformung in die Oberseite der Blockanode sogenannte Zapfenlöcher eingeformt werden (Broschüre "Rüttelverdichter" Nr. 10-710 der KHD Humboldt Wedag AG vom Februar 1981, Seiten 6 und 8). Die auf diese Weise abgeformten Grünanoden werden dann in einer Brennofenanlage in einem Bett grobkörnigen Kokses gebrannt bzw. gehärtet. Bei diesem Brennprozeß kann sich ergeben, daß Kokskörner in den an der Anodenblockoberseite vorgeformten Zapfenlöchern anbacken. Außerdem können sich beim Brennprozeß der Durchmesser sowie der Abstand der vorgeformten Zapfenlöcher ändern, z. B. durch Schrumpfung verkleinern.

Bei der Vorbereitung der gebrannten Anodenblöcke für ihren Einsatz in der Schmelzflußelektrolyse müssen die Anodenblöcke mit den Anodenstangen fest verbunden werden. Dazu werden die unteren Enden der Anodenstangen, die meistens zu einem Joch ausgebildet sind und deren Anzahl zwischen 2 bis z. B. 6 je nach Blockgröße variieren kann, von oben in die entsprechend vorgeformten Zapfenlöcher eingeführt, und die verbleibenden Zwischenräume bzw. ringförmigen Hohlräume in den Zapfenlöchern werden dann mit flüssigem Eisen ausgegossen. Nach dem Erstarren des Gußmetalls soll dadurch eine gute Haftverbindung einerseits zwischen der Gußhülse und dem Anodenstangenende und andererseits zwischen der Gußhülse und dem Anodenblock entstehen.

Wenn die vorgeschriebene Maßhaltigkeit der in die Anodenblockoberseite eingeformten Zapfenlöcher in Bezug auf Durchmesser, Tiefe und Mittenabstand nicht gegeben ist, wird die Haftverbindung zwischen Anodenstange und Anodenblock verschlechtert und die Gußhülsen bekommen über den Umfang gesehen eine ungleichmäßige Wandstärke, was wiederum einen ungleichmäßigen Stromdurchgang von der Anodenstange in den Anodenblock zur Folge hat.

Aus der FR-A-2 590 911 ist eine Vorrichtung zur Reinigung der Zapfenlöcher an der Oberseite einer Blockanode bekannt, die mit einer Transporteinrichtung unter die Arbeitsköpfe einer Bearbeitungsstation gebracht wird. Die Positionierung des Anodenblocks unterhalb der Arbeitsköpfe erfolgt in der Weise, daß der Anodenblock mit der Transporteinrichtung so lange seitlich in die Bearbeitungsstation eingefahren wird, bis Annäherungsschalter die Transporteinrichtung dann ausschalten, wenn die Achsen der Anodenblocklöcher mit den Achsen der Arbeitsköpfe fluchten.

Aus der GB-A-2 115 441 ist nicht eine Vorrichtung zur Bearbeitung der an der Oberseite einer Kohlenstoff-Blockanode vorhandenen vorgeformten Zapfenlöcher bekannt, sondern eine Vorrichtung, mit deren Hilfe die unteren Enden einer Anodenstange, welche in der Regel zu einem Joch geformte Zapfen bzw. Nippel aufweisen, mittels hohler trichterförmiger Führungen zentrisch in die an der Oberseite eines Anodenblocks befindlichen Bohrungen eingeführt werden können, so daß zwischen den Nippeln und den Wandungen der Bohrungen ein Ringspalt verbleibt, der anschließend mit Flüssigmetall ausgegossen wird.

Der Erfindung liegt die Aufgabe zugrunde, eine Vorrichtung zu schaffen, die es ermöglicht, vorgeformte Zapfenlöcher an der Oberseite einer Kohlenstoff-Blockanode so zu bearbeiten, daß maschinell gleichzeitig zwei oder mehr Zapfenlöcher mit hoher Genauigkeit und Maßhaltigkeit in Bezug auf Zapfenloch-Durchmesser, -Tiefe, -Mittenabstand, -Wandungsglätte etc. eingearbeitet werden können.

Diese Aufgabe wird erfindungsgemäß mit einer Vorrichtung mit den Merkmalen des Anspruchs 1 gelöst. Eine vorteilhafte Ausgestaltung ist im Anspruch 2 angegeben.

Die erfindungsgemäße Vorrichtung schafft die Möglichkeit, einen Anodenblock, dessen vorgeformte Zapfenlöcher zu bearbeiten sind, mittels eines mechanischen Zentriermechanismusses horizontal zentriert zu positionieren, wobei der Zentriermechanismus an einer Zentrierhaube angelenkt ist, die oberhalb einer Anodenblockablage mit Rollenbahn angeordnet ist. Mittels des mechanischen Zentriermechanismusses mit wenigstens vier Schwenkhebeln läßt sich der Anodenblock horizontal genau in Relation zur Zentrierhaube mit einem Spindelkasten positionieren, denn solange die Blockanode sich auf den Rollen befindet, läßt sie sich horizontal gut verschieben. In der horizontal zentrierten Position läßt sich dann der zu bearbeitende Anodenblock mittels einer Hubeinrichtung von der Rollenbahn abheben und mit seiner Oberseite gegen die Unterseite der Zentrierhaube spannen und unter Vorspannung dort arretieren, so daß die Bearbeitung der Zapfenlöcher der Blockanode unter deren Vorspannung sehr maßgenau erfolgen kann.

Die Anodenblock-Zentriereinrichtung zur seitlichen Ausrichtung des auf der Rollenbahn abgelegten zu bearbeitenden Anodenblocks weist mindestens vier an der Zentrierhaube angelenkte Schwenkhebel mit endseitiger Andruckrolle auf, von denen je eine an eine Seitenfläche des Anodenblocks andrückbar ist, d. h. jeweils zwei sich diametral gegenüberliegende Schwenkhebel können bezüglich des Anodenblocks eine Zangenschwenkbewegung zum seitlichen Ausrichten des Anodenblocks ausführen.

Mit der Erfindung ist also ein völlig neuartiger Maschinentyp geschaffen, der die maßgenaue maschinelle Bearbeitung vorgeformter Zapfenlöcher bei Kohlenstoff-Blockanoden ermöglicht. Die Ablage mit dem zu bearbeitenden Anodenblock und der innerhalb der Zentrierhaube angeordnete Spindelkasten sind bezüglich ihres vertikalen Abstandes relativ zueinander beweglich und zwar mit Vorteil in der Weise, daß die Anodenblockablage die Hubeinrichtung aufweist, wobei die Unterseite der Zentrierhaube jedoch feststeht.

Nachdem der Anodenblock mit der Hubeinrichtung angehoben und mit seiner Oberseite gegen die Unterseite der Zentrierhaube gedrückt und während des Bearbeitungsvorganges dort unter Vorspannung gehalten wird, wird der Spindelkasten nach unten gefahren und die an der Anodenblockoberseite vorhandenen vorgeformten zwei oder mehr Zapfenlöcher werden durch Einfahren und Betätigen der Bearbeitungswerkzeuge gleichzeitig maschinell gereinigt bzw. nachgearbeitet, um die auf das Joch der jeweiligen Anodenstange abgestimmten Zapfenlöcher hinsichtlich des Mindestdurchmessers, deren Tiefe als auch des genauen Mittenabstandes herzustellen. Nachdem sämtliche Zapfenlöcher des Anodenblocks mit der erforderlichen Maßhaltigkeit hergestellt sind, fährt der Spindelkasten in seine Ausgangsstellung hoch, die Hubeinrichtung senkt den Anodenblock auf die Rollenbahn ab und der fertig bearbeitete Anodenblock wird aus der Maschine herausgefahren.

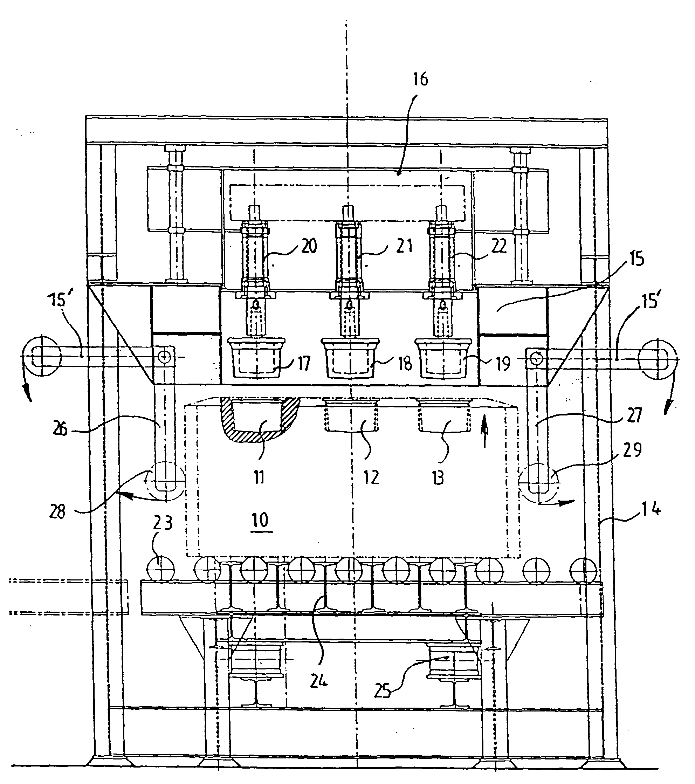

Die Erfindung und deren weitere Merkmale und Vorteile werden anhand des in der Zeichnung schematisch dargestellten Ausführungsbeispieles näher erläutert.

Die Zeichnung zeigt in Seitenansicht, ausschnittsweise im Vertikalschnitt, eine Ausführungsform der erfindungsgemäßen Vorrichtung zur Bearbeitung der an der Oberseite eines gebrannten Anodenblocks (10) vorhandenen vorgeformten drei Zapfenlöcher (11, 12, 13).

In einem Maschinengerüst (14), das z. B. aus Profilstahl zusammengesetzt ist, ist eine z. B. aus einer Blech-Schweißkonstruktion bestehende Zentrierhaube (15) mit einem Zentriermechanismus (15') angeordnet. In der Zentrierhaube (15) ist ein Spindelkasten (16) angeordnet, der die einzelnen Spindeln mit zugehörigen in die Anodenblock-Zapfenlöcher (11, 12, 13) einführbaren Bearbeitungswerkzeugen (17, 18, 19) wie z. B. Fräser sowie die zugehörigen Spindelantriebe (20, 21, 22) trägt. Im unteren Teil des Maschinengerüsts (14) ist unterhalb der Zentrierhaube (15) eine ortsfeste Rollenbahn (23) zur Ablage des zu bearbeitenden Anodenblocks (10) angeordnet. Die Rollenbahn (23) für die Anodenblockablage in der Maschine steht mit einer Hubeinrichtung (24) in Verbindung in Gestalt einer Hubplatte, die über mechanisch, hydraulisch, pneumatisch, elektrisch etc. betätigte Hubelemente (25) anhebbar ist und die geeignete Profile aufweist, die zwischen den Rollen der Rollenbahn (23) angeordnet sind und beim Anheben der Hubplatte den Anodenblock (10) von der Rollenbahn (23) abheben und nach oben drücken.

Gemäß zeichnerischem Ausführungsbeispiel ist an der Anodenblock-Zentrierhaube (15) zur horizontalen Ausrichtung des auf der Rollenbahn abgelegten zu bearbeitenden Anodenblocks (10) ein aus vier Schwenkhebeln bestehender Zentriermechanismus mit endseitiger Andruckrolle angelenkt, von denen in der Zeichnung die sich gegenüberliegenden Schwenkhebel (26 und 27) mit Andruckrolle (28, 29) zu sehen sind, während die dazu um 90 ° versetzt angeordneten beiden anderen sich gegenüberliegenden Schwenkhebel in der Zeichnung nicht zu sehen sind.

Die Funktionsweise der erfindungsgemäßen Vorrichtung ist folgende:

Der zu bearbeitende Anodenblock (10) wird über die Rollenbahn (23) in die Vorrichtung bis etwa zur Mitte der Zentrierhaube (15) gefahren. Hier wird der Anodenblock durch die Zentriereinrichtung (15'), d. h. durch jeweiliges Verschwenken der Zangenschwenkhebel in Längs- und Querrichtung mittig zu der in geringem Abstand über Oberseite Block angeordneten Zentrierhaube (15) horizontal zentriert und festgehalten, wonach die unter der Rollenbahn (23) eingebaute Hubplatte (24) den Anodenblock (10) von den Rollen abhebt und von unten gegen die Unterseite der Zentrierhaube (15) drückt und unter Vorspannung dort arretiert. Anschließend fährt der Spindelkasten (16) abwärts und in einem Arbeitsgang werden die drei Zapfenlöcher (11, 12, 13) durch Einführung der Bearbeitungswerkzeuge (17, 18, 19) gereinigt bzw. auf Maßhaltigkeit hinsichtlich genauer Zapfenlochdurchmesser und - Tiefe sowie genauer Mittenabstände nachgearbeitet. Nach Beendigung dieses Arbeitsganges fährt der Spindelkasten (16) wieder in die Ausgangsstellung nach oben, die Hubplatte (24) senkt den Anodenblock (10) wieder auf die Rollenbahn (23) ab, und nach Öffnen der Zentriereinrichtung (15') kann der fertig bearbeitete Anodenblock (10) aus der Maschine herausgefahren werden.

Es versteht sich, daß im Spindelkasten (16) der Abstand der Bearbeitungswerkzeuge (17, 18, 19) voneinander veränderbar gemacht sein kann zwecks Anpassung an die Geometrie der zu einem Joch ausgebildeten Anodenstangenenden, die in die vorgeformten Anodenblock-Zapfenlöcher (11, 12, 13) einzuführen sind. Werden die Zwischenräume zwischen den Zapfenlöchern (11, 12, 13) und den eingeführten Anodenstangenenden mit Gußeisen ausgefüllt, so bilden sich um die Anodenstangenenden Gußhülsen, die bei erfindungsgemäß bearbeiteten Anodenblöcken immer eine gleichmäßige Wandstärke genau vorherbestimmbarer Querschnittsdicke haben und die damit einen sehr gleichmäßigen Stromdurchgang von der Anodenstange in den Anodenblock ermöglichen.

Es wäre auch denkbar, daß die erfindungsgemäße Vorrichtung nicht nur zur Nachbearbeitung der an der Oberseite eines Anodenblocks bei seiner Vibrationsabformung bereits vorgeformten Zapfenlöcher dient, sondern daß ohne Vorformung der Zapfenlöcher mittels der Bearbeitungswerkzeuge (17, 18, 19) in den Anodenblock (10) von seiner ebenen Oberseite ausgehend die Zapfenlöcher mit der notwendigen hohen Maßhaltigkeit eingearbeitet werden.

## Patentansprüche

1. Vorrichtung zur Bearbeitung der an der Oberseite einer Kohlenstoff-Blockanode vorhandenen vorgeformten Zapfenlöcher, mit den folgenden Merkmalen :
- in einem Maschinengerüst (14) ist eine Zentrierhaube (15) mit einer Anodenblock-Zentriereinrichtung (15') zur seitlichen Ausrichtung des zu bearbeitenden Anodenblocks (10) angeordnet;
- innerhalb der Zentrierhaube (15) ist ein Spindelkasten (16) angeordnet, der die einzelnen Spindeln mit zugehörigen in die Anodenblock-Zapfenlöcher einführbaren Bearbeitungswerkzeugen (17, 18, 19) sowie die Spindelantriebe (20, 21, 22) trägt;
- im unteren Teil des Maschinengerüsts (14) ist unterhalb der Zentrierhaube (15) eine Ablage mit einer ortsfesten Rollenbahn (23) für den Anodenblock (10) angeordnet;
- an der Zentrierhaube (15) ist zur horizontalen Ausrichtung des auf der Rollenbahn (23) abgelegten zu bearbeitenden Anodenblocks (10) ein Zentriermechanismus (15') bestehend aus wenigstens vier Schwenkhebeln (26, 27) mit endseitiger Andruckrolle (28, 29) angelenkt, von denen je eine an eine Seitenfläche des Anodenblocks (10) andrückbar ist;
- der vermittels des Zentriermechanismusses (15') auf der Rollenbahn (23) horizontal genau ausgerichtete Anodenblock (10) ist mittels einer Hubeinrichtung (24) von der Rollenbahn (23) abhebbar und während des Bearbeitungsvorganges mit seiner Oberseite gegen die Unterseite der Zentrierhaube (15) spannbar;
- die Zentrierhaube (15) als auch der Spindelkasten (16) stehen mit einer Absenkeinrichtung in Verbindung.

2. Vorrichtung nach Anspruch 1,
dadurch gekennzeichnet, daß im Spindelkasten (16) der Abstand der Bearbeitungswerkzeuge (17, 18, 19) voneinander veränderbar ist zwecks Anpassung an die Mittenabstände der zu einem Joch ausgebildeten Anodenstangenenden, die in die zu bearbeitenden Anodenblock-Zapfenlöcher einzuführen sind.

## Claims

1. A device for machining the peg or journal holes previously formed on the top surface of a carbon block anode, having the following features:
- a centring hood (15) comprising an anode-block centring device (15') for laterally aligning the anode block (10) for machining is disposed in a machine frame (14);
- a spindle box (16) containing the individual spindles, the spindle drives (20, 21, 22) and the associated machine tools (17, 18, 19) for insertion into the anode-block peg holes is disposed inside the centring hood (15);
- a compartment comprising a stationary roller train (23) for the anode block (10) is disposed in the bottom part of the machine frame (14) underneath the centring hood (15);
- a centring mechanism (15') comprising at least four rocking levers (26, 27) with pressure rollers (28, 29) at the ends is pivoted to the centring hood (15) for horizontally aligning the anode block (10) for machining and deposited on the roller train (23), each roller being pressable against a side of the anode block (10);
- the anode block (10), accurately aligned horizontally on the roller train (23) by the centring mechanism (15'), is liftable off the roller train (23) by a lifting device (24) and its top surface can be clamped against the underside of the centring hood (15) during the machining operation, and
- the centring hood (15) and the spindle box (16) are connected to a lowering device.

2. A device according to claim 1, characterised in that in the spindle box (16) the distance between the machine tools (17, 18, 19) can be varied in order to adapt to the centre distance between the ends of anode rods, which are formed into a yoke and are inserted into the peg holes in the anode block for machining.

## Revendications

1. Dispositif d'usinage des trous de goujon préformés dans la face d'un bloc anodique en carbone,
caractérisé en ce que
- dans un bâti de machine (14) est montée une tête de centrage équipée d'un dispositif de centrage (15') servant à orienter latéralement le bloc (10) à usiner,
- à l'intérieur de la tête de centrage (15) se trouve un carter à broches (16) portant les broches individuelles équipées de leurs outils d'usinage (17, 18, 19) qui peuvent être introduits dans les trous de goujon, ainsi que les entraîneurs (20, 21, 22) de ces broches,
- à la partie inférieure du bâti de machine (14) et en dessous de la tête de centrage (15) se trouve une installation comportant une piste fixe à rouleaux (23) pour recevoir le bloc anodique (10),
- pour orienter horizontalement le bloc anodique (10) à usiner, déposé sur la piste à rouleaux (23), la tête de centrage (15) porte un mécanisme de centrage (15) composé d'au moins quatre leviers basculants (26, 27) portant chacun à une extrémité un galet d'appui (28, 29) pouvant être appliqué sur une face latérale du bloc anodique (10),
- une fois qu'il a été exactement orienté horizontalement, sur la piste à rouleaux (23) par le mécanisme de centrage (15'), le bloc anodique (10) est dégagé de la piste (23) par un dispositif de levage (24) et appliqué sous tension par sa face supérieure contre la face inférieure de la tête de centrage (15), pendant le processus d'usinage,
- la tête de centrage (15) ainsi que le carter à broches (16) sont reliés à un dispositif d'abaissement.

2. Dispositif selon la revendication 1,
caractérisé en ce que
dans le carter à broches (16), la distance entre les outils d'usinage (17, 18, 19) peut être modifiée pour être adaptée aux distances entre les axes des extrémités des tiges d'anodes conformées pour réaliser une culasse et qui seront introduites dans les trous de goujon à usiner.
